# EUROPEAN PATENT SPECIFICATION

(11) **EP 0 798 354 B1**
(45) Date of publication and mention of the grant of the patent: **28.06.2000**
(21) Application number: 96105122.4
(22) Date of filing: 29.03.1996
(51) Int. Cl.: C09J 4/06, C08F 283/10

(54) **Thermosettable adhesive with improved coatability**
Wärmehärtbarer Klebstoff mit verbessertem Beschichtbarkeit
Adhésif thermodurcissable avec revêtabilité améliorée

(43) Date of publication of application: 01.10.1997
(73) Proprietor: MINNESOTA MINING AND MANUFACTURING COMPANY, St. Paul, Minnesota 55133-3427 (US)
(72) Inventor: Feichtmeier, Georg, Minnesota Min.& Manuf.Co., St. Paul, Minnesota 55144-1000 (US); Karim, Naimul, Minnesota Min.& Manuf.Co., St. Paul, Minnesota 55144-1000 (US)
(74) Representative: Wilhelm, Stefan

(56) References cited:
- EP-A- 0 012 542
- EP-A- 0 359 373
- WO-A-95/13327
- GB-A- 2 119 810

## Description

### Field of the invention

The present invention refers to a thermosettable adhesive with improved coatability, to the precursor of such adhesive, to an adhesive tape comprising one or more layers whereby an exposed layer of the tape comprises an adhesive according to the invention and to the use of these tapes for structural melt sealing and structural bonding applications.

### Background of the Invention

Acrylic ester/epoxy resin pressure-sensitive thermosetting adhesives are disclosed in US 5,086,088. The photopolymerizable monomers of the acrylic ester part are preferably mixed with the photoinitiator and prepolymerized to a syrup of from 500 to 5,000 cps prior to adding the epoxy part in order to improve the coatability of the adhesive system. The adhesives of US '088 are suggested for use in structural bonding of components to metal surfaces or for the melt sealing of metal seams, especially for roof ditch molding in the automotive industry.

WO-A-94/21,741 describes a latent, thermosettable, melt-flowable sheet material comprising at least two layers, one of which is expandable and flowable, and the other of which flows to encapsulate the expandable layer between it and a substrate to which the sheet material has been adhered. Both layers can comprise an acrylic ester part and an epoxy resin part whereby the expandable layer can further comprise a blowing or foaming agent or expandable spheres to provide for expansion of said lower layer upon heating. The sheet material of WO '741 comprising two or more layers is said to be particularly useful for providing topographical and/or protective features to primed or unprimed metal automobile parts or bodies to seal joints formed by such metal parts.

WO-A-96/10059 is also directed to a latent, thermosettable, melt-flowable sheet material comprising at least two layers. The construction essentially differentiates over that described in WO '741 in that one of said upper and lower layers comprises a macromonomer. The latent, thermosettable and melt-flowable sheet material of WO-A-96/10,059 also finds particular utility in forming seal joints of, for example, metal automobile parts.

Use of thermosettable, pressure-sensitive adhesives for the melt sealing of metal seams requires a sufficient melt flow of the adhesives. The adhesives described in prior art do not fulfill all practical requirements to a desirable extent and/or form part of relatively complicated tape constructions comprising two or multiple layers.

The thermosettable, pressure-sensitive adhesive layer of sealing films or tapes should furthermore preferably exhibit a thickness of up to several millimeters or more in order to provide, for example, a reliable and mechanically stable seal joint of metal automobile parts. Coating of relatively thick photopolymerizable precursors of thermosettable, pressure-sensitive adhesive layers requires a sufficiently high and stable coating viscosity of the precursor to allow, for example, for coating onto a web or release liner.

The coating viscosity of the precursor of the thermosettable, melt-flowable adhesive can be adjusted, for example, by varying the degree of prepolymerization of the polymerable acrylic ester syrup as is disclosed in US 5,086,088. Adding pigments or fillers like, for example, fumed silica to the precursor which is also mentioned in US '088, typically results in a thixotropic precursor the viscosity of which was found to decrease often rapidly with time. It is furthermore difficult to remove air bubbles from the thixotropic precursor comprising a filler component, and the physical and visual profiles of the adhesive layer obtained after the final thermal cure do not meet all practical requirements to a desirable degree.

The coating viscosity of the precursor of the adhesive layer can furthermore be adjusted by adding so-called polymer-adds such as, for example, acrylate copolymers, polyacetal polymers, poly (vinylbutyral) resins or polyesters such as polycaprolactones as is disclosed in WO-A-94/21,741 WO-A-95/13327 or in WO-A-96/10,059. The applicability of the polymer-adds disclosed in these references is, however, limited and does not meet all practical requirements to a desirable extent. The addition of polyvinylbutyral resins, for example, was found to tend to impart brittleness to the adhesive layer after the final thermal cure. Polycaprolactones can be dissolved in the precursor of the adhesive layer only at elevated temperatures of typically 70°C or more, and the polycaprolactone concentration obtained is too low for many applications.

GB-A-2,119,810 describes highly cross-linkable, UV and thermally curable, thermoplastic-containing systems which are solvent coated and cannot be provided in tape form. EP-A-0,359,373 describes photopolymerizable tapes which are highly cross-linked and detackified upon irradiation.

### Short Description of the Invention

The present invention refers to a photopolymerizable precursor of a thermosettable adhesive, said precursor exhibiting an improved coatability and comprising
(A) from 30 to 65% by weight of a photopolymerizable, optionally partly prepolymerized mixture comprising at least one monofunctional acrylic acid ester of a non-tertiary alcohol, and at least one reinforcing, copolymerizable monomer;
(B) from 10-65% by weight of one or more epoxy resins containing no photopolymerizable groups;
(C) from 0.2-15% by weight of one or more polymers at least one of them being a vinyl ester type polymer or a vinyl ether type polymer comprising units of formula (I) 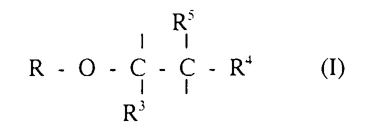 wherein R is R¹-CO- or R²,
   R¹ and R² are independently from each other linear or branched alkyl groups with 1-5 C atoms wherein one or two non-adjacent CH₂-groups may be replaced independently from each other by -O-, -CHhalogen-, -C(halogen)₂- or -CO- with the proviso that two O-atoms are not directly linked, and
   R³, R⁴ and R⁵ are independently from each other H, halogen or have the meaning indicated for R¹ and R²;
(D) from 0.1% to 10% by weight of a heat-activatable hardener for the epoxy-resin;
(E) from 0.005 to 3% of a photoinitiator; and
(F) from 0-2% by weight of one or more crosslinking agents.

The present invention furthermore refers to a thermosettable adhesive which is obtainable by photopolymerizing said precursor and to a thermoset adhesive which is obtainable from said thermosettable, melt-flowable adhesive by thermal curing. The invention furthermore refers to a method for preparing said precursor and to structural bonding or structural sealing tapes or films comprising one or more layers whereby at least one exposed layer comprises said thermosettable adhesive. The invention furthermore refers to the use of said structural sealing tapes for forming seal joints of, for example, metal automobile parts and, in particular, for roof ditch sealing in automobiles.

### Detailed Description of the Invention

Above and below, the term photopolymerizable precursor of the thermosettable adhesive of the invention is a composition comprising above components (A) - (F):
(A) from 30 to 65% by weight of a photopolymerizable, optionally partly prepolymerized mixture comprising at least one monofunctional acrylic acid ester of a non-tertiary alcohol, and at least one reinforcing, copolymerizable monomer;
(B) from 10-65% by weight of one or more epoxy resins containing no photopolymerizable groups;
(C) from 0.2-15% by weight of one or more polymers at least one of them being a vinyl ester type polymer or a vinyl ether type polymer comprising units of formula (I) 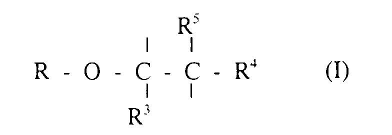 wherein R is R¹-CO- or R²,
   R¹ and R² are independently from each other linear or branched alkyl groups with 1-5 C atoms wherein one or two non-adjacent CH₂-groups may be replaced independently from each other by -O-, -CHhalogen-, -C(halogen)₂- or -CO- with the proviso that two O-atoms are not directly linked, and
   R³, R⁴ and R⁵ are independently from each other H, halogen or have the meaning indicated for R¹ and R²;
(D) from 0.1% to 10% by weight of a heat-activatable hardener for the epoxy-resin;
(E) from 0.005 to 3% of a photoinitiator; and
(F) from 0-2% by weight of one or more crosslinking agents.

Above and below, the term thermosettable adhesive refers to an adhesive which is obtainable by photopolymerization of the precursor. Likewise, the term thermoset adhesive refers to an adhesive which is obtainable by thermally curing the thermosettable adhesive.

Above and below, the term structural melt sealing tape or films refers to a sheet-like structure comprising one or more layers, at least one exposed layer of which comprises a thermosettable and melt-flowable adhesive according to the present invention, said exposed adhesive layer exhibiting a melt-flow of at least 1%, more preferably at least 3% and especially preferably at least 5% when measured according to the test method described below.

Likewise, the term structural bonding tape or film above and below refers to a sheet-like structure comprising one or more layers, at least one exposed layer of which comprises a thermosettable adhesive according to the present invention, said exposed adhesive layer exhibiting a melt-flow of less than 1% when measured according to the test method described below.

Part (A) of the photopolymerizable precursor of the thermosettable adhesive according to the invention comprises from 30 to 65% by weight with respect to the mass of the precursor of a photopolymerizable mixture containing at least one monofuntional acrylic acid ester of a non-tertiary alcohol, and at least one reinforcing copolymerizable monomer whereby the mixture can be unpolymerized or partially prepolymerized. In case it is partly prepolymerized, the degree of prepolymerization is chosen so that a mixture of parts (A) and (E) exhibits a viscosity of between 100 cps to 3,000 cps and, more preferably, between 300 cps and 2,500 cps at room temperature.

The mixture is preferably unpolymerized. It is one of the advantages of the present invention that the precursor can easily be formulated to exhibit a coatable viscosity even in case of thick coatings with a thickness of up to several millimeters or even more without requiring a partial prepolymerization of the mixture of part (A) and/or the addition of fillers. This is advantageous because partial prepolymerization or syruping is an additional chemical processing step requiring good process control and involving additional costs.

The mixture of part (A) can be, however, also partly prepolymerized which is effected by premixing together part (A) and part (E) of the precursor comprising from 0.005 to 3% by weight with respect to the mass of the precursor of a photoinitiator. The premix is then partially prepolymerized to a syrup exhibiting a viscosity in the range of from 100 to 10,000 cps and, more preferably, from 300 to 2,500 cps.

Although the addition of pigments, thickeners or fillers such as, for example, hydrophobic silica, hollow glass microspheres or calcium carbonate is not required to achieve a coatable viscosity of the precursor, such additives can be blended into the precursor in order to impart, for example, specific functional properties to the thermoset adhesive after final curing. The amount of these additives is, however, preferably less than 10% by weight and more preferably less than 5% by weight and especially preferably less than 2.5% by weight with respect to the mass of the precursor.

The acrylic or methacrylic acid ester compounds used in part (A), are monofunctional acrylic or methacrylic esters of a non-tertiary alcohol, preferably having from 4 to 14 carbon atoms in the alcohol moiety. Included in this class of esters are n-butyl acrylate, hexyl acrylate, 2-ethylhexyl acrylate, octyl acrylate, isooctyl acrylate, decyl acrylate and dodecyl acrylate. Mixtures of two or more esters may be employed.

The copolymerizable reinforcing monomers of part (A) of the precursor are preferably selected from the group consisting of monomers such as isobornyl acrylate, N- vinyl pyrrolidone, N-vinyl caprolactam, N-vinyl piperidine, N,N-dimethylacrylamide, and acrylonitrile. Preferred reinforcing monomers are nitrogen-containing such as those nitrogen-containing monomers listed above. The reinforcing monomer or monomers will generally be selected such that a homopolymer prepared from each of them will have a glass transition temperature higher than a homopolymer prepared from each of the acrylic or methacrylic ester compounds employed. Small amounts of copolymerizable acids such as acrylic acid may be included as long as they do not deleteriously affect the curing of the epoxy. Acrylic acid can be used in amounts up to 2 parts acrylic acid to 100 parts of acrylic ester monomer.

The acrylic or methacrylic ester compounds are preferably present in an amount of 50 to 95 parts by weight with respect to the mass of part (A), and the reinforcing monomer compounds are preferably present in an amount of 50 to 5 parts by weight with respect to the mass of part (A). One skilled in the art is able to vary the nature and amount of the reinforcing monomer to obtain the properties desired.

The photopolymerizable acrylic or methacrylic compounds and the reinforcing comonomer compounds are furthermore selected to form a stable mixture with the epoxy resin.

Epoxy resins which are useful for part (B) of the precursor are preferably selected from the group of compounds that contain an average of at least two epoxy groups per molecule.

The ratio of the mass of part (B) over part (A) preferably is between 0.2 and 2 and more preferably between 0.4 and 1.5. The ratio of the mass of part (B) over part (A) preferably is between 0.3 and 1.2 for structural melt sealing applications and between 0.4 and 1.4 for structural bonding applications.

The epoxy resin can be liquid, semi-liquid or solid at room temperature. It was found that the tackiness of the thermosettable adhesive can be modified and optimized with respect to specific requirements by varying the amount of liquid, semi-liquid and solid epoxy resins.

In case the resulting thermosettable adhesive is required to be non-tacky to the touch at room temperature, the ratio of solid epoxy resins is preferably chosen to be high and, in particular, is at least 80% by weight and more preferably at least 90% by weight with respect to the mass of part (B). Non-tacky thermosettable adhesives are useful for structural melt sealing applications.

If the resulting thermosettable adhesive is to be tacky to the touch at room temperature, part (B) preferably comprises one or more epoxy resins which are liquid or semi-liquid at room temperature. The ratio of the mass of liquid and semi-liquid epoxy resins to the mass of solid epoxy resins preferably is at least 2.0 and, more preferably, at least 2.25. Tacky thermosettable adhesives are useful for structural melt sealing and structural bonding applications.

The tackiness of the thermosettable adhesive can also be modified by varying the mass ratio of acrylic acid ester(s) of non-tertiary alcohol(s) to the reinforcing, copolymerizable monomer(s) of part (A). Increasing the amount of acrylic acid ester(s) of non-tertiary alcohol(s) with respect to the mass of part (A) tends to increase the tackiness of the thermosettable adhesive while increasing the amount of reinforcing, copolymerizable monomer(s) tends to decrease tackiness.

The person skilled in the can modify and adjust the tackiness by varying the amount of liquid, semi-liquid and solid epoxy resins of part (B) and/or by varying the amount of acrylic acid ester(s) of non-tertiary alcohol(s) and the reinforcing, copolymerizable monomer(s) of part (A).

Suitable epoxy resins include phenolic epoxy resins, bisphenol epoxy resins, hydrogenated epoxy resins, aliphatic epoxy resins, halogenated bisphenol epoxy resins, and novalac epoxies. Mixtures of one or more epoxy resins may be employed.

Examples of preferred liquid or semi-liquid epoxy resins include hydrogenated epoxy resins and aliphatic epoxy resins.

Examples of preferred semi-liquid or solid epoxy resins include bisphenol epoxies with the most preferred epoxy resin being the diglycidyl ether of bisphenol-A, formed by reaction of bisphenol-A with epichlorohydrin.

Part (C) of the precursor according to the present invention furthermore comprises from 0.2-15% by weight of one or more polymers at least one of them being a vinyl ester type polymer or a vinylether type polymer comprising units of formula (I)

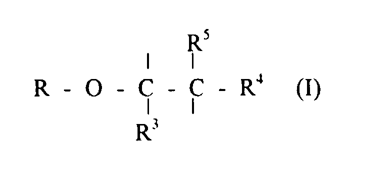

Above and below polymers comprising units of formula I are also termed as polymers of formula I.

R is preferably R¹- CO- with R¹ being preferably methyl, ethyl, propyl, butyl, pentyl, methoxy, ethoxy, propoxy or partially or fully halogenated methyl. R especially preferably denotes CH₃ - CO-. Polymers comprising units of formula I wherein R is R¹-CO- are termed below and above as vinyl ester type polymers.

R can also be R² with R² being preferably methyl, ethyl, propyl, butyl or pentyl. Polymers comprising units of formula I wherein R is R² are termed below and above as vinyl ether type polymers.

R³, R⁴ and R⁵ are preferably independently from each other hydrogen, methyl or ethyl. One of R³, R⁴ and R⁵ may also preferably be methoxy, ethoxy, propoxy, partly or fully halogenated methyl or a fluoro or chloro group.

The polymer comprising units of formula I may be a homopolymer or a copolymer of two or more comonomers. The polymer used in the precursors according to the invention preferably comprises at least 60% and more preferably at least 80% by weight of one or more units of formula (I).

Especially preferred vinyl ester type polymers are vinyl acetate polymers which are usually obtained by radical emulsion polymerization (see Houben-Weyl, Methods of Organic Chemistry, Macromolecular Materials, Part I, Thieme Publishers, Stuttgart). Suitable comonomers to be used in emulsion copolymerization with vinyl acetate are, for example, ethylene, dibutyl maleate, bis (2-ethylhexyl) maleate, ethylacrylate, butyl acrylate, 2-ethyhexyl acrylate or vinyl laurate. The properties of polyvinylacetate (PVA) or polyvinylacetate copolymers (PVAC) can furthermore be modified by grafting during polymerization (see Encyclopedia of Polymer Science and Engineering, New York, 1989, vol. 17, pp. 410 - 411).

PVA is an especially preferred polymer comprising units of formula I, and part (C) preferably comprises at least 50% by weight and more preferably at least 75% by weight of polyvinylacetate whereby the mass percentages refer to the mass of part (C).

Part (C) can also preferably comprise a vinylacetate/ethylene copolymer or a blend of polyvinyl acetate and polyethylene with the use of a vinylacetate/ethylene copolymer being preferred. Part (C) preferably comprises at least 60% and more preferably at least 80% by weight of the vinyl acetate/ethylene copolymer and/or the blend of polyvinyl acetate and polyethylene whereby the mass percentages refer to the mass of part (C). The mass ratio of ethylene over vinyl acetate preferably is lower than 0.2 and, more preferably, lower than 0.15.

Vinyl ether type polymers which are useful in the precursors of the present invention comprise alkyl vinyl ether homopolymers such as, for example, poly (isobutyl vinyl ether), poly (ethyl vinyl ether), poly (methyl vinyl ether) or poly (tert-butyl vinyl ether) which are usually obtained by cationic polymerization using Lewis acid catalysts (Encyclopedia of Polymer Science and Engineering, New York, 1989, vol. 17, p. 447).

Preferred vinyl ether type copolymers which are useful in the precursors of the present invention, comprise poly (vinyl ether-co-vinyl acetate), poly (isobutyl vinyl ether-co-vinylchloride) or poly (2,2,3,3,-tetra-fluoropropyl vinyl ether-co-chlorotrifluoro-ethylene). Suitable initiators and polymerization conditions are reported in Encyclopedia of Polymer Science and Engineering, New York, 1989, vol. 17, pp. 458 - 460.

Alkyl vinyl ether homopolymers and copolymers are preferably used in blends with vinyl ester type polymers whereby the amount of the alkyl vinyl ether homo- and/or copolymer(s) with respect to the mass of the vinyl ester polymer(s) preferably is less than 20 wt.%.

Especially preferred are precursors according to the invention wherein the polymer(s) comprising units of formula I are vinyl ester type polymers.

The polymers according to formula (I) preferably exhibit a molecular weight between 50,000 and 500,000 g/mol. If the molecular weight of the polymers of formula (I) is lower than 50,000 g/mol the coating viscosity of the precursor is often too low while for molecular weights exceeding 500,000 g/mol, the polymer of formula (I) tends to exhibit an insufficient solubility in parts (A) and (B) of the precursor.

Part (C) can comprise other polymer additives, if desired.

For structural melt sealing applications, part (C) may include an acrylate homopolymer or copolymer which contributes to handling properties prior to final thermosetting cure while not adversely affecting flowability at this stage, and furthermore increases the hardness of the adhesive after thermosetting cure. Acrylate copolymers are preferred. Preferably, the acrylate copolymer has a Tg above 22°C. Suitable acrylate copolymers include polyisobutylmethacrylate, polyethylmethacrylate, polymethylmethacrylate, and the two methylmethacrylate/butylmethacrylate copolymers sold by Rohm & Haas under the tradenames Acryloid®B-67, B-72, B-82, B-60 and B-66, respectively. The amount of the acrylate polymer with respect to the mass of part (C) preferably does not exceed 12% and is more preferably lower than 10%.

Part (C) can furthermore comprise polyacetal polymers which tend to increase the modulus of the photopolymerized adhesive prior to thermosetting, as well as enhance the adhesion of paint to the thermoset adhesive. A preferred type of polyacetal polymer is poly(vinylbutyral). The poly(vinylbutyral) should have sufficient hydroxyl functionality to be soluble in part (A). Hydroxyl functionalities between about 9% and 13% have been found to be useful. The poly(vinylbutyral) may be used in amounts not exceeding 10% by weight with respect to the mass of part (C). The amount of poly(vinylbutyral) is more preferably lower than 8%. Addition of higher amounts of poly(vinylbutyral) adversely affect the melt-flow properties.

Poly(vinylbutyral) resins are sold by Monsanto under the trademark BUTVAR™ in various grades having different molecular weights, etc.

Other additives useful to modify the flow properties and to improve the handling properties of the sheet include polyester polymers which may be added in amount of up to 10% by weight with respect to the mass of part (C). Higher amounts tend to be insoluble in the precursor according to the invention and deteriorate the melt-flowability of the photopolymerized, thermosettable adhesive. Preferred polyester polymers are those having carboxyl or hydroxyl terminal groups, and a number average molecular weight between 7,500 and 200,000, and more specifically between 10,000 and 50,000, and most preferably between 15,000 and 30,000. It is preferred that the polyesters are also linear, saturated, and semi-crystalline. Suitable polyesters are commercially available from Hüls America, Inc. under the Dynapol trademark with the following product numbers S1402, S1358, S1227, S1229, S1359, and S1401.

Another useful class of polyesters to be added to part (C) are polycaprolactones, which may be added in an amount up to 7% by weight with respect to the mass of part (C) in order to improve adhesion of paint to the thermoset adhesive and to modify melt-flow properties. Useful polycaprolactones include those described in U.S. Pat. No. 3,169,945. Preferred polycaprolactones polyols can be represented by the following structure:

HO-[(CH₂)₅-C(=O)-O]ₙ-R-[-O-C(=O)-(CH₂)₅]ₙ-OH

wherein
R is divalent alkylene radical, and
n is approximately 2 to 200.

Useful polycaprolactone diols and polymers are commercially available from Union Carbide, Inc. under the TONE trademark.

For structural bonding applications, the amount of polymers of formula I can be varied in a wide range between 40 - 100% by weight with respect to the mass of part (C) with the proviso that the precursor comprises preferably at least 3% and more preferably at least 5% of one or more polymers comprising units of formula (I). If the concentration is chosen to be lower than 40% the coating viscosity of the precursor was found to be too low for many applications. The concentration of polymers of formula (I) preferably is at least 50%, and more preferably at least 80% with respect to the mass of part (C).

For structural melt-sealing applications, the amount of polymers according to formula (I) with respect to the mass of part (C) especially preferably is at least 80% by weight. Photopolymerizable precursors according to the invention part (C) of which comprises a high amount of polymers of formula (I), are characterized by high values of viscosity, and the precursors can be coated onto release liners or backings, for example, with a high thickness of up to several millimeters or more without the addition of any fillers being necessary. The coating viscosity can be adjusted by varying the molecular mass of polymers of formula (I), the amount of polymers or formula (I) with respect to the mass of part (C), and the amount of part (C) with respect to the mass of the precursor, and thus optimized with respect to specific applications. It was furthermore found that these precursors when photopolymerized result in melt-flowable and thermosettable adhesives which are characterized by high values of melt-flow as measured according to the test method specified below. Part (C) of the precursor is preferably based on polymers of formula (I) wherein R is R¹-CO. An especially preferred polymer adhesive is polyvinyl acetate, and part (C) preferably comprises at least 80% and more preferably at least 85% of polyvinyl acetate.

Vinyl ester or vinyl ether polymers can typically be easily dissolved in part (A) of the precursor at room temperature whereas other polymer additives often require heating to temperatures of typically 70°C or more to effect dissolution. It was furthermore found that the thermosettable adhesives obtained by photopolymerization of the precursors, have excellent storage and handling properties when used in sheet-like form, being essentially free of cold flow.

The precursor according to the present invention furthermore comprises as part (D) from 0.1% to 10% by weight of one or more heat-activatable hardener compounds to effect the curing of the epoxy resin under the application of heat. The hardener may be any type, but preferably an amine type hardener that is selected from the group comprising dicyandiamide of polyamine salts. These are available from a variety of sources, e.g., Omicure™ available from Omicron Chemical and Ajicure™ available from Ajinomoto Chemical and Amicure™ available from Air Products.

The epoxy hardeners or curatives can be varied in order to modify the curing temperature of the thermosettable adhesive thereby controlling the flow characteristics of the adhesive. Other types of hardeners that are useful include acid and anhydride curatives. Examples of anhydride curatives include phthalic anhydride, hexahydrophthalic anhydride, tetrahydrophthalic anhydride, trimellitic anhydride, pyromellitic dianhydride, maleic anhydride, 1,2-cyclohexane dicarboxylic anhydride, succinic anhydride, dodecenyl succinic anhydride, 3,3',4,4'-benzophenonetetracarboxylic dianhydride, nadic methyl anhydride, methyl hexahydropthalic anhydride, polymeric anhydrides, and glutaric anhydride.

Examples of acid curatives include acrylic acid, methacrylic acid, crotonic acid, itaconic acid, fumaric acid, maleic acid, citraconic acid, adipic acid, suberic acid, azelaic acid, sebacic acid, and dodecanedioic acid.

When using the thermosettable and melt-flowable adhesive in sheet-like form for roof ditch sealing of automobiles, the heat to which the sheet material is exposed at different points of, for example, an automotive painting cycle may be insufficient to fully cure the epoxy resin. In these cases, it may be advantageous to add an accelerator to the precursor, so that the epoxy resin may fully cure at a lower temperature, or may fully cure when exposed to heat for shorter periods. The use of accelerators is also preferred in other melt-sealing applications as well as in bonding applications. The accelerators are typically selected based on the type of epoxy curative used. Imidazoles and urea derivatives are particularly preferred in the practice of the present invention for use as accelerators because of their ability, as shown by the examples with amine curing agents herein, to extend the shelf life of acrylic based materials containing uncured epoxy resin. The most preferred imidazoles for use in the present invention are 2,4-diamino-6-(2'-methyl-imidazoyl)-ethyl-s-triazine isocyanurate, 2-phenyl-4- benzyl-5-hydroxymethylimidazole, 2,4-diamino-6-(2'-methyl-imidazoyl-ehtyl-s-triazine, hexakis (imidazole) nickel phthalate and toluene bis-dimethylurea.

For acid and anhydride curing agents, typical accelerators include amines, ammonium compounds, phosphonium compounds, dicyandiamide, and sulfonate compounds. Examples of suitable accelerators for acid and anhydride curatives are trimethylamine, triethylamine, imidazole, triisopropylamine, dimethylbenzylamine, tris-(2,4,6-dimethylaminomethyl)-phenol, triethylammonium chloride, triisopropylammonium chloride, dimethylbenzylammonium chloride, triethylamine sulfonate, tetramethyl ammonium chloride, tetraethyl ammonium bromide, tetrabutylammonium iodide, triphenyl phosphonium acetate, ethyltriphenylphosphonium bromide, 2-dimethylaminoethyl triphenyl phosphonium bromide, N,N-dimethylacrylamide, and N-vinylcaprolactam.

The precursor furthermore comprises as part (E) from 0.005 to 3% by weight with respect to the mass of the precursor of one or more photoinitiators effecting photopolymerization of the precursor. Any conventional free radical photoinitiator activatable by, for example, ultraviolet light may be used. An example of a suitable photoinitiator is 2,2-dimethoxy-1,2-diphenylethane-1-one (Irgacure™651 available from Ciba-Geigy Corporation).

It was furthermore found that the melt-flow properties of the photopolymerized, thermosettable adhesive can be distinctly increased when adding one or more macromonomers to the precursor of the adhesive which are copolymerizable with the monomers of part (A). Useful copolymerizable macromonomers comprise a polymeric moiety having a vinyl group which will copolymerize with the alkyl (meth)acrylates and the reinforcing monomer (e.g., isobornyl acrylate). For melt-sealing applications, the precursor is preferably designed to impart a high melt-flowability to the thermosettable adhesive without the addition of the macromonomer(s) but it was surprisingly found that the melt-flowability of the thermosettable adhesive can be distinctly increased by adding one or more macromonomers.

The macromonomer is preferably represented by the general formula (II)

X-(Y)ₙ-Z II

wherein
X is a vinyl group copolymerizable with the alkyl acrylate and reinforcing monomers;
Y is a divalent linking group where n can be zero or one, and
Z is a monovalent polymeric moiety having a Tg greater than 20°C, and a molecular weight in the range of 2,000 to 30,000 and being essentially unreactive under copolymerization conditions. In above formula II group X is preferably a group according to formula (III) 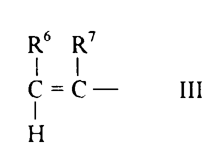 wherein R6 is a hydrogen atom, a methyl group or a COOH group and R⁷ is a hydrogen atom or methyl group or COOR¹⁴ wherein R¹⁴ is a lower alkyl group. In case R⁷ is COOR¹⁴, R⁶ preferably is H or CH₃. The double bond between the carbon atoms provides a moiety capable of copolymerizing with the alkyl acrylate and reinforcing monomers.

In above formula II group Z is preferably a group according to formula (IV) 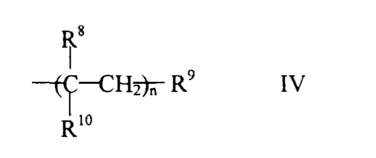 wherein R⁸ is a hydrogen atom or a lower alkyl group, R⁹ is a lower alkyl group, n is an integer from 20 to 500, and R¹⁰ is a monovalent radical selected from the group according to formula (V) 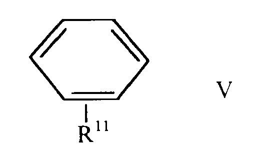 wherein R¹¹ is hydrogen, or a lower alkyl group or -CO₂R¹² wherein R¹² is a lower alkyl group.

Preferably, the macromonomer is selected from the following smaller group of compounds according to formulas (VI)-(XI) 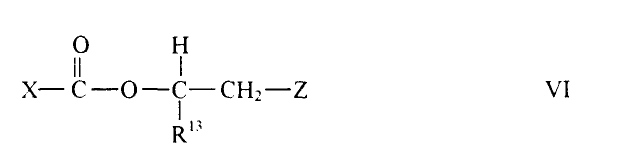 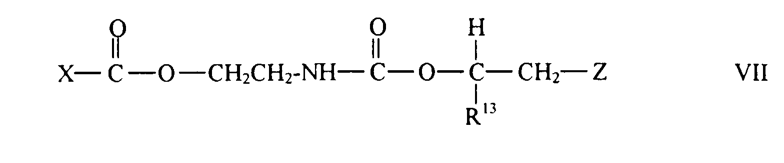 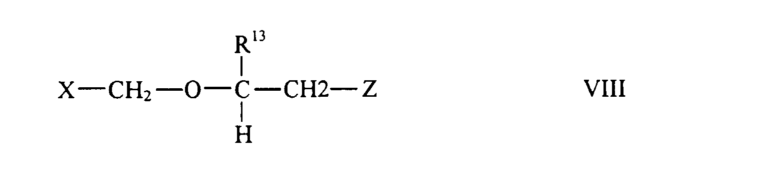 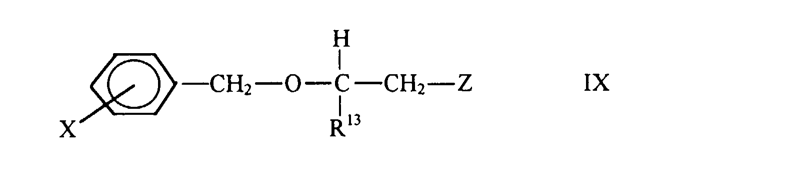 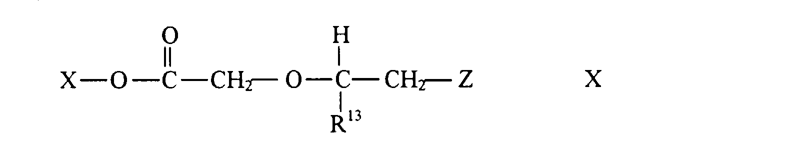 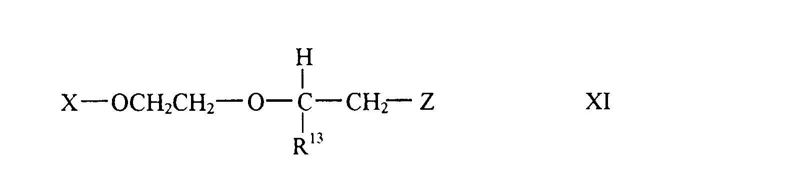 wherein R¹³ is a hydrogen atom or a lower alkyl group.

The vinyl-terminated polymeric macromonomers are known and may be prepared by the method disclosed in US 3,786,116 and US 3,842,059 (Milkovich, et al). Macromonomers are also available commercially such as RC13K styrene macromonomer from Sartomer.

The amount of macromonomer that is useful varies from about 0.5% to about 17.5% by weight with respect to the mass of the precursor. Higher amount of macromonomer can be used but the cost could be prohibitive. Preferably, the amount of macromonomer is 0.5 - 10%, and more preferably, from about 0.5 - 7.5%.

While the addition of one or more macromonomers may be omitted in case of structural bonding applications, it was found that precursors comprising one or more macromonomers exhibit distinctly improved melt-flow and hence structural melt sealing properties.

Part (A) of the precursor may furthermore comprise one or more epoxy functional monomers such as, for example, methacrylate or glycidyl acrylate which may preferably be added in an amount of about 0.1 to about 10% by weight with respect to the mass of part (A).

Another epoxy functional oligomer useful as a reinforcing or crosslinking species is the epoxy adduct of 2-isocyanotoethylmethacrylate and diglycidyl ether of bisphenol A.

The addition of epoxy functional monomers is especially preferable in case of structural bonding applications.

The addition of crosslinking agents tends to impede melt-flow properties of the thermosettable adhesive but typically also increases its stiffness which facilitates, for example, handling of sheet-like material. Consequently, the addition of one or more crosslinking agents to the precursor of the adhesive is often favourable in case of structural bonding applications, and the amount is preferably chosen between 0.005 - 2% and more preferably between 0.01 - 1% by weight with respect to the mass of the precursor. Contrary to this, no crosslinking agent is preferably used in case of structural melt-sealing applications; if necessary, an amount of less than 0.2% by weight with respect to the mass of part (A) can be added in order to compromise between melt-flow properties and handleability.

Useful crosslinking agents are those that are free-radically polymerizable with acrylate monomers such as divinyl ethers and multi-functional acrylates. Examples of multi-functional acrylates include 1,6-hexanediol diacrylate, tri-methylol-propane triacrylate, pentaerythritol tetraacrylate, and 1,2-ethylene glycol diacrylate.

The melt-flow characteristics of the thermosettable adhesive can be improved and optimized with respect to specific requirements by including one or more chain transfer agents into the precursor of the adhesive.

Chain transfer agents are generally known and include halogenated hydrocarbons such as carbon tetrabromide, and sulfur compounds such as lauryl mercaptan, butyl mercaptan, ethanethiol, and 2-mercaptoether.

The chain transfer agents can also be polymeric or oligomeric in nature such as those polymers and macromonomers described in US 4,746,713, US 5,028,677, US 5,264,530, and US 5,290,633. In particular, the macromonomers described in US 5,264,530, incorporated herein by reference are useful. Commercially available macromonomers that can function as a chain transfer agent include those sold under the Elvacite™ tradename by ICI.

The compositions may further include acrylic resins which have been observed to improve the flow properties. Such acrylic resins are commercially available, for example, by the tradename ISOCRYL EP-550 acrylic resin (Estron Chemical, Inc.) and SCX 8008 acrylic resin (Johnson Wax Specialty Chemical).

In case of structural sealing applications, the addition of one or more chain transfer agents in a concentration of between 0.05 - 5% by weight with respect to the mass of the precursor is preferred while in case of structural bonding applications the amount of chain transfer agents is preferably less than 1% by weight and more preferably, the addition of chain transfer agents is completely omitted.

The precursor of the adhesive according to the invention can comprise further additives such as, for example, antioxidants, stabilizers or fire retardants. The use of inorganic fillers and/or pigments is often disadvantageous because these typically render the precursor thixotropic so that the removal of entrapped air bubbles during coating, for example, becomes very difficult which results in poor physical and visual properties of the final thermoset adhesive. If the addition of a viscosity modifying agent is desirable core/shell modifiers comprising a low Tg core polymer and a shell polymer which is compatible with the precursor, are preferably used instead of inorganic fillers. It was found that these core/shell modifiers improve the coating viscosity without adversely affecting the melt-flow properties, and furthermore improve low temperature properties of the precursor and adhesive according to the present invention. Core/shell modifiers which are useful additives to the precursor of the present invention comprise, for example, a rubber or a silicone polymer core which is bonded to a polymethylmethacrylate shell polymer. A preferred core/shell polymer is commercially available as Modifier 445006 from Wacker Chemie, Munich, Germany.

The amount of these further additives preferably does not exceed 15% by weight with respect to the mass of the precursor and more preferably is between 0.1 - 10%.

The thermosettable adhesive according to the present invention is preferably used in sheet-like form such as, for example, as adhesive tape.

Especially preferred are transfer tapes which do not comprise a backing. Transfer tapes can be obtained, for example, by coating the precursor according to the invention onto a flexible carrier web, preferably a silicone release liner which is transparent to ultraviolet radiation, with subsequent photopolymerization in an inert, i.e., a substantially oxygen free atmosphere, e.g., a nitrogen atmosphere. A sufficiently inert atmosphere can be achieved by covering a layer of the precursor with a plastic film which is substantially transparent to ultraviolet radiation, and irradiating through that film in air as described in US 4,181,752 (Martens et al.).

The liners are then removed prior to applying the resulting transfer tape of the thermosettable adhesive.

When using the transfer tape according to the invention, for example, for sealing of metal joints such as roof ditches in the automotive industry, it must exhibit a sufficient paintability. The paintability of the thermoset adhesives according to the invention is sufficient for most applications. If an improvement of the paintability is desired this can be achieved, for example, by laminating a paintable backing such as, for example, a PVC layer onto the layer of the photopolymerized, thermosettable adhesive or by coating the precursor of the adhesive onto a PVC backing. Depending on the application, other backings such as metal films or polymeric layers comprising, for example, polyesters such as polyethylene terephthalate or polybutylene terephthalate, polyurethanes, polyacrylates or polyepoxides may be used. Polybutylene terephthalate is a preferred paintable backing. The thickness of the backing is preferably between 50 - 500 µm and more preferably between 75 and 300 µm. Especially preferred is "POCAN 7916", which is a rubber modified polybutylene terephthalate/polycarbonate blend which is commercially available from Bayer, Leverkusen, Germany.

The tape may comprise two layers of the thermosettable adhesive according to the invention on opposite sides of a backing whereby the two adhesives may be of the same or of different composition. The backing can be selected from a group of materials comprising polymer films of various stiffness such as, for example, polyolefins, polyesters, polycarbonates or polymethacrylates, metal films, non-wovens or paper. The thickness of the backing is typically between 50 - 1,000 µm. Thus, it is, for example, possible to provide a tape comprising structural bonding properties on one side and structural melt sealing properties on the other. The tape can also comprise a photopolymerized, thermosettable adhesive layer on one side of the backing, and another adhesive layer, for example, an acrylate or rubber resin based pressure-sensitive adhesive layer on the other side. The tape can also comprise further layers such as, for example, one or more acrylic foam layers. It is also possible to omit the backing so that the tape comprises, for example, 2 photopolymerized, thermosettable adhesives being laminated to each other.

The person skilled in the art can easily describe further modifications of tapes comprising two adhesive layers according to the invention which are optimized with respect to a specific application.

A specific tape construction is described in WO-A-94/21,741 and WO-A-96/10059 which comprises two thermosettable, melt-flowable adhesive layers which can be directly attached to each other or each can be applied, for example, onto nonwoven materials or strands of yarn. The adhesive tape is applied, for example, to automobile parts or bodies to melt-seal joints formed by such metal parts. The lower of the two layers is expandable thus providing for optimum sealing of such joints while the upper, non-expandable layer provides for an aesthetically pleasing surface which may be, for example, painted. Expandability is obtained by including into the lower layer a blowing or foaming agent or expandable spheres which are activatable by heating. Suitable blowing or foaming agents are well known in the art and include azo-derivatives and inorganic compounds such as carbonates and bicarbonates. Suitable expandable spheres are also well known in the art. A blowing or foaming agent will preferably be employed in an amount of 0.01 to 5% by weight with respect to the mass of the precursor. Agents providing an expansion of the thermosettable adhesive layer, can also be used in other tapes such as those described above, if desired.

The sheet-like, thermosettable adhesive materials such as tapes according to the present invention have a number of applications in industry. Depending on the composition of the adhesive they are primarily suited for structural bonding or structural melt sealing applications.

An example of a structural melt sealing application is in the automotive industry where the adhesive tapes can be utilized in a process to seal metal joints in automobiles. In this process, the thermosettable adhesive tape is applied over the joint of metal parts to be sealed and thermoset and painted, for example, during a subsequent painting cycle.

An example of a structural bonding application is in the automotive industry where the thermosettable adhesive tape according to the invention is used for attaching the socket of rear mirrors to windshields.

The invention is further illustrated by the following non-limiting examples in which all parts are expressed as parts by weight unless otherwise indicated. The adhesive tapes prepared were subjected to the following tests, both before and after thermosetting, in order to evaluate the performance as either a structural sealing or structural bonding adhesive.

### Test methods for the precursor of the photopolymerized, thermosettable adhesive

### Brookfield viscosity of the precursor

Viscosity of the non-polymerized precursor was measured by standard Brookfield viscometry at room temperature. Results were recorded in centipoise (cps).

### Test methods for the photopolymerized thermosettable adhesive

### 90 Degree peel adhesion

A 1.27 cm x 15.24 cm strip of a thermosettable adhesive layer between two release layers was prepared as described in the examples and allowed to age for at least 24 h before testing. One release liner was removed and the exposed material pressed by hand onto the dull side of a 0.13 mm thick foil of anodized aluminium which serves as a backing for the tape construction.

The second release liner was removed and the exposed surface adhered to a stainless steel test panel from which the peel adhesion is to be measured. The sample was rolled down onto the stainless steel test plate 4 times with a 6.8 kg roller and allowed to remain in contact with the test substrate for about 1 minute before testing.

The test construction thus obtained was then placed in a tensile tester (Instron™) so that the aluminium foil and melt sealing material were peeled away from the stainless steel test panel at an angle of 90 degrees. The peel adhesion was measured at a speed of 30.5 cm per min and was recorded in N/1.27 cm.

The test was repeated four times and the results then averaged.

### Melt flow behavior

A 1 mm thick layer of a thermosettable adhesive between 2 release layers was prepared as described in the examples and allowed to age for at least 24 hours before testing.

The top release liner was removed and a sample of the dimensions 1.27 cm x 1.27 cm was adhered to a stainless steel test plate (6.3 cm x 5 cm) which had been cleaned three times with isopropanol and three times with heptane. The remaining release liner was removed, so that only a thin layer of the melt sealing material remained on the stainless steel plate.

This construction was then placed in a vertical fashion in a forced air oven set at a temperature of 160°C. After 20 minutes, the construction was removed from the oven and allowed to cool.

The new length of the layer of melt sealing material was measured and compared to the original length of 1.27 cm. The melt flow test was conducted twice and the results averaged and recorded in percent.

### Tensile strength and elongation at break

A standard tensile strength procedure was conducted on a layer of thermosettable tape according to ISO 1184 D 638. A layer of the thermosettable tape was prepared as described in the examples and allowed to age for at least 24 hours before testing.

This test gives an indication of the strength of the thermosettable adhesive tape in the state in which it is applied to the substrates to be bonded and indicates whether the tape has sufficient cohesive strength.

### Test methods for the thermoset adhesive

### Overlap shear

A modified version of ISO 4587 was used.

A 1 mm thick sample of the thermosettable adhesive tape which was prepared as described in the examples and allowed to age for at least 24 hours before testing, measuring 1.27 cm x 2.54 cm, was adhered flush with the end of a first steel coupon so that the width was entirely covered with tape and the tape extended 1.27 cm along the length of the coupon. In order to maintain a constant thickness of the bond in the event that adhesive flow occurs during cure, two pieces of stainless steel wire (0.030") were placed on top of the sample, spaced at regular intervals and aligned parallel to the length of the steel coupon.

A second steel coupon was then placed on top of the sample in a manner so that the sample was also flush with the end of the second coupon. The non-adhered body of the second coupon did not overlap the unbonded area of the first coupon, however. The sample was sandwiched between the steel coupons in such a manner that the coupons overlapped only in the bonded area.

Pressure was applied to the bond by securing the coupon/sample/coupon sandwich from the sides using small wing-type binder clips.

The melt sealing material sample was then cured by placing the construction in a forced air oven at 160°C for 20 minutes. The cured construction was then placed in a tensile tester and the jaws moved apart at 50 mm per minute.

The maximum force required to break the bond was recorded in N/mm². The elongation of the melt sealing material at break was also recorded, in percent as compared to the original length of the bonded area. The test was repeated four times and the results averaged.

This test gives an indication of the toughness and strength of the adhesive bond after it has been cured.

### Examples 1 - 4

A non-tacky thermosettable adhesive for melt sealing applications was prepared by the following procedure.

N-vinyl caprolactam monomer was melted in a ventilated forced-air oven and dissolved in n-butylacrylate monomer (solution A). The epoxy-functional material, polyvinylacetate and polymethylmethacrylate macromer were mixed together at room temperature (mixture B). Solution A and mixture B were then mixed at room temperature, whereby mixture B dissolved in the monomeric solution A.

Photoinitiator for the monomer polymerization was then added as well as hardener and accelerator to promote the epoxy cure and the antioxidant. The final formulation was mixed at high shear for 10 min at 1,500 rpm.

The exact chemical composition of the materials described in examples 1 - 4 is shown in Table 1.

The viscous mixture obtained was degassed and coated onto a transparent adhesive-repellent release liner (silicone-coated polyethylene terephthalate film) with a knife coater at a thickness of 1 mm for test purposes. A second transparent release liner (silicone-coated polyethylene terephthalate film) was laminated on top of the coating. The polymeric layer between the two transparent release liners was then polymerized using radiant energy of medium pressure mercury lamps applied through each of the transparent release liners.

The total energy utilized in the polymerization step: 380 mJ / cm² through both top and bottom release liners effecting a total radiation energy of 760 mJ /sq.cm.

| | | |
|---|---|---|
| Intensity | first zone | 2.84 mW / cm² (both top and bottom) |
| Intensity | second zone | 1.54 mW / cm² (both top and bottom) |

The properties of the photopolymerized, thermosettable adhesives thus obtained were evaluated by performing the tests described in the test method section above for thermosettable adhesives. The results are summarized in Table 2 in the section "PHOTOPOLYMERIZED, NOT THERMOSET". Likewise, the properties of the thermoset adhesives of Examples 1 - 4 were evaluated by performing the tests described in the test method section above for thermoset adhesives. The results are summarized in table 2 in the section "THERMOSET".

**Table 1**

| **Compositions - Non tacky melt sealing materials** | | | | |
|---|---|---|---|---|
| **Example** | **1** | **2** | **3** | **4** |
| n-Butyl acrylate | 40.73 | 39.93 | 40.06 | 40.02 |
| N-vinyl caprolactam | 8.94 | 8.77 | 8.79 | 8.78 |
| UW-1 | 8.44 | 8.28 | 8.30 | 8.30 |
| Elvacite M 1010 | 0 | 1.95 | 1.95 | 1.95 |
| D.E.R. 671 | 39.73 | 38.96 | 39.07 | 39.04 |
| Irgacure 651 | 0.12 | 0.12 | 0.12 | 0.20 |
| Irganox 1010 | 0.05 | 0.05 | 0.05 | 0.05 |
| DICY | 1.39 | 1.36 | 1.37 | 1.37 |
| 2MZ-A | 0.60 | 0.58 | 0.29 | 0.29 |
| In table 1 the following abbreviations are used: | | | | |
| UW-1 Polyvinylacetate Vinnapas UW-1 from Wacker Chemie (Munich), softening point 107 - 112° molecular weight 150,000 | | | | |
| Elvacite M 1010 Polymethylmethacrylate macromonomer having a single copolymerizable group on one end available from ICI | | | | |
| D.E.R. 671 Bisphenol A based epoxy resin, available from Dow Chemical, epoxy eq. wt. ca. 500, solid at room temperature | | | | |
| Irgacure 651 Photoinitiator Irgacure™ 651, available from Ciba-Geigy, Switzerland | | | | |
| Irganox 1010 Antioxidant Irganox 1010, available from Ciba-Geigy | | | | |
| DICY Epoxy hardener Amicure CG 1200 from Air Products (dicyandiamide) | | | | |
| 2MZ-A Epoxy accelerator Curezol 2MZ-azine from Air Products (imidazole derivative) | | | | |

**Table 2**

| **Properties - Non tacky melt sealing materials** | | | | |
|---|---|---|---|---|
| **Example No.** | **1** | **2** | **3** | **4** |
| | | | | |
| PHOTOPOLYMERIZED, NOT THERMOSET | | | | |
| Melt flow (%) | 8 | 20 | 36 | 20 |
| Tensile strength (N/mm2) | 3.9 | 2.8 | 3.7 | 3.6 |
| Elongation (%) | 592 | 536 | 529 | 536 |
| | | | | |

| THERMOSET | | | | |
|---|---|---|---|---|
| Force at break (N/mm2) | 1.7 | 2.4 | 6.2 | 2.4 |
| Elongation (%) | 58 | 42 | 37 | 43 |

### Examples 5 - 11

A tacky thermosettable adhesive tape for melt sealing applications was prepared by the following procedure.

N-vinyl caprolactam monomer was melted in a ventilated forced air oven and dissolved in butylacrylate monomer (solution A). The epoxy resins, polyvinylacetate, polymethylmethacrylate macromer and the core shell polymer were mixed together at room temperature (mixture B). Solution A and mixture B were then mixed at room temperature, whereby the polyvinylacetate, polymethylmethacrylate macromer and the two epoxy resins dissolved in the monomeric solution A. The core shell polymer was not dissolved, but was dispersed uniformly in the resulting mixture.

Photoinitiator for the monomer polymerization as well as hardener and accelerator for the epoxy cure and the antioxidant were then added, and the mixture was subjected to high shear for 10 min at 1500 rpm.

Chemical compositions used in Examples 5 - 11 and Comparative Example 1 are shown in Table 3. Radiation polymerization was conducted exactly as described in Examples 1 - 4.

The properties of the unpolymerized precursor thus obtained were evaluated by performing the tests described in the test method section above for precursors. The results are summarized in Table 4 in the section PRECURSOR ("NOT PHOTOPOLYMERIZED, NOT THERMOSET"). Likewise, the properties of the photopolymerized, thermosettable adhesives and the thermoset adhesives, respectively, of Examples 5 - 11 were evaluated by performing the tests described in the test method section above for thermosettable or thermoset adhesives, respectively. The results are summarized in table 4 in the sections "PHOTOPOLYMERIZED, NOT THERMOSET" and "THERMOSET", respectively.

**Table 3**

| Compositions - Tacky melt sealing materials | | | | | | | | |
|---|---|---|---|---|---|---|---|---|
| Examples | 5 | 6 | 7 | 8 | 9 | 10 | 11 | C1 |
| n-Butyl acrylate | 39.19 | 37.19 | 43.36 | 41.39 | 39.70 | 40.79 | 41.92 | 44.53 |
| N-vinyl caprolactam | 8.60 | 8.17 | 9.52 | 9.08 | 8.71 | 8.95 | 9.21 | 9.77 |
| UW-1 | 10.99 | 10.43 | 10.57 | 10.09 | 11.14 | 11.44 | 11.76 | 16.29 |
| ElvaciteM 1010 | 3.82 | 3.63 | 2.11 | 4.04 | 3.87 | 3.98 | 4.09 | 2.17 |
| D.E.R. 671 | 7.65 | 8.71 | -- | -- | 4.84 | 4.97 | 5.12 | -- |
| D.E.R. 331 | 19.12 | 21.77 | 23.79 | 22.71 | 21.79 | 19.90 | 17.90 | 24.44 |
| Irgacure 651 | 0.12 | 0.11 | 0.13 | 0.13 | 0.12 | 0.12 | 0.13 | 0.14 |
| Irganox 1010 | 0.05 | 0.05 | 0.05 | 0.05 | 0.05 | 0.05 | 0.05 | 0.05 |
| DICY | 2.05 | 1.95 | 2.22 | 2.12 | 2.23 | 2.04 | 1.84 | 2.28 |
| 2MZ-A | 0.76 | 0.73 | 0.32 | 0.30 | 0.29 | 0.30 | 0.31 | 0.33 |
| 445006 | 7.65 | 7.26 | 7.93 | 10.09 | 7.26 | 7.46 | 7.67 | -- |
| The abbreviations contained in table 3 were partly used in table 1 already and explained above. Additionally, the following abbreviations are used in table 3: | | | | | | | | |
| D.E.R. 331 Bisphenol A based epoxy resin, epoxy eq. wt. ca. 185, liquid at room temperature; available from DOW Chemical | | | | | | | | |
| 445006 Core/shell polymer, Modifier 445006 available from Wacker Chemie (Munich), silicone core with polymethylmethacrylate shell, particle size < 30 micron, Tg (two transitions) -110 deg, 120 deg | | | | | | | | |

**Table 4**

| Properties - Tacky melt sealing materials | | | | | | | | |
|---|---|---|---|---|---|---|---|---|
| **Example No.** | 5 | 6 | 7 | 8 | 9 | 10 | 11 | C1 |
| | | | | | | | | |
| PRECURSOR (NOT PHOTOPOLYMERIZED, NOT THERMOSET) | | | | | | | | |
| Viscosity (cps) | 1700 | 1920 | 1100 | 1200 | 1160 | 1400 | 1400 | 660 |

| PHOTOPOLYMERIZED, NOT THERMOSET | | | | | | | | |
|---|---|---|---|---|---|---|---|---|
| Peel adhesion (N/1.27 cm) | 20 | 30 | 17 | 19 | 18 | 33 | 9 | 21 |
| Melt flow (%) | 20 | 30 | 12 | 12 | 16 | 16 | 8 | 12 |
| Tensile strength (N/mm2) | 1.0 | 0.9 | 0.7 | 0.6 | 1.0 | 0.9 | 1.2 | 1.6 |
| Elongation (%) | 440 | 570 | 405 | 597 | 564 | 554 | 466 | 417 |
| | | | | | | | | |

| THERMOSET | | | | | | | | |
|---|---|---|---|---|---|---|---|---|
| Force at break (N/mm2) | 4.4 | 4.2 | 2.0 | 1.8 | 2.5 | 2.1 | 1.8 | 1.4 |
| Elongation (%) | 23 | 23 | 32 | 71 | 44 | 67 | 35 | <1* |

| | | | | | | | | |
|---|---|---|---|---|---|---|---|---|
| * Thermoset adhesive is brittle. | | | | | | | | |

### Examples 12 - 15

A tacky thermosettable adhesive tape for structural bonding applications was prepared by the following procedure:

N-vinyl caprolactam monomer was melted in a ventilated forced air oven and dissolved in butylacrylate monomer (solution A). The epoxy resins, polyvinylacetate or ethylene vinyl acetate, respectively, polymethylmethacrylate macromer, core shell polymer, glass bubbles and fumed silica were mixed together at room temperature (mixture B). Solution A and mixture B were then mixed at room temperature, whereby the polyvinylacetate or ethylene vinyl acetate, respectively, polymethylmethacrylate macromer and the two epoxy resins dissolved in the monomeric solution A. The core shell polymer, glass bubbles and the fumed silica were not dissolved, but were dispersed uniformly in the resulting mixture.

Photoinitiator and crosslinker for the monomer polymerization as well as hardener and accelerator for the epoxy cure and the antioxidant were then added, and the mixture was subjected to high shear for 10 min at 1500 rpm.

Chemical compositions used in Examples 12 - 15 are shown in Table 5. Radiation polymerization was conducted exactly as described in Examples 1 - 4.

The properties of the photopolymerized, thermosettable adhesives thus obtained were evaluated by performing the tests described in the test method section above for thermosettable adhesives. The results are summarized in Table 6 in the section "PHOTOPOLYMERIZED, NOT THERMOSET". Likewise, the properties of the thermoset adhesives of Examples 12 - 15 were evaluated by performing the tests described in the test method section above for thermoset adhesives. The results are summarized in table 6 in the section "THERMOSET".

**Table 5**

| Composition bonding materials | | | | |
|---|---|---|---|---|
| | 12 | 13 | 14 | 15 |
| n-Butyl acrylate | 42.96 | 32.22 | 30.43 | 30.43 |
| N-vinyl caprolactam | 9.43 | 12.38 | 11.54 | 11.54 |
| UW-1 | 10.48 | 7.87 | -- | -- |
| LEVAPREN KA 8479 | -- | -- | 10.49 | -- |
| LEVAPREN 700 HV | -- | -- | -- | 10.49 |
| D.E.R. 671 | -- | 9.97 | 5.25 | 9.97 |
| D.E.R. 331 | 23.58 | 26.76 | 31.48 | 26.76 |
| Irgacure 651 | 0.13 | 0.10 | 0.10 | 0.10 |
| Irganox 1010 | 0.05 | -- | -- | -- |
| DICY | 2.20 | 3.94 | 3.94 | 3.94 |
| 2MZ-A | 0.63 | -- | -- | -- |
| Ni imidazole | -- | 1.70 | 1.70 | 1.70 |
| 445006 | 10.48 | -- | -- | -- |
| HDDA | 0.06 | 0.03 | 0.03 | 0.03 |
| C 15/250 | -- | 2.10 | 2.10 | 2.10 |
| Aerosil R-972 | -- | 2.94 | 2.94 | 2.94 |
| The abbreviations contained in table 5 were partly used in tables 1 or 3, respectively, already and explained above. Additionally the following abbreviations are used in table 5: | | | | |
| LEVAPREN KA 8479 Ethylene vinyl acetate copolymer from Bayer (Leverkusen, Germany); 80% vinyl acetate, 20% ethylene | | | | |
| LEVAPREN 700 HV Ethylene vinyl acetate copolymer from Bayer (Leverkusen, Germany); 70% vinyl acetate, 30% ethylene | | | | |
| Ni imidazol Epoxy accelerator; hexakis (imidazole) nickel phthalate, available from 3M, St. Paul, U.S.A. | | | | |
| Aerosil R-972 Fumed silica, available from Degussa, Hanau, Germany | | | | |
| C 15/250 3M™ Scotchlite™ hollow glass microbubbles, available from 3M, St. Paul, U.S.A. | | | | |

**Table 6**

| Properties - Structural bonding materials | | | | |
|---|---|---|---|---|
| EXAMPLE NO. | 12 | 13 | 14 | 15 |
| | | | | |
| PHOTOPOLYMERIZED, NOT THERMOSET | | | | |
| Peel adhesion (N/1.27 cm) | 15 | 7.5 | 7.0 | 7.5 |
| Tensile strength (N/mm2) | 1.3 | -- | -- | -- |
| Elongation (%) | 616 | -- | -- | -- |
| | | | | |

| THERMOSET | | | | |
|---|---|---|---|---|
| Force at break (N/mm2) | 3.0 | 7.4 | 8.0 | 8.0 |
| Elongation (%) | 10 | -- | -- | -- |

## Claims

1. A photopolymerizable precursor of a thermosettable adhesive, said precursor exhibiting an improved coatability and comprising
(A) from 30 to 65% by weight of a photopolymerizable, optionally partly prepolymerized mixture comprising at least one monofunctional acrylic acid ester of a non-tertiary alcohol, and at least one reinforcing, copolymerizable monomer;
(B) from 10-65% by weight of one or more epoxy resins containing no photopolymerizable groups;
(C) from 0.2-15% by weight of one or more polymers at least one of them being a vinyl ester type polymer or a vinyl ether type polymer comprising units of formula (I) 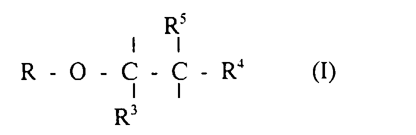 wherein R is R¹-CO- or R²,
R¹ and R² are independently from each other linear or branched alkyl groups with 1-5 C atoms wherein one or two non-adjacent CH₂-groups may be replaced independently from each other by -O-, -CHhalogen-, -C(halogen)₂- or -CO- with the proviso that two O-atoms are not directly linked, and
R³, R⁴ and R⁵ are independently from each other H, halogen or have the meaning indicated for R¹ and R²;
(D) from 0.1% to 10% by weight of a heat-activatable hardener for the epoxy-resin;
(E) from 0.005 to 3% of a photoinitiator; and
(F) from 0-2% by weight of one or more crosslinking agents.

2. Precursor according to claim 1 wherein at least one polymer of part (C) has an average molecular weight of between 50,000 and 500,000 g/mol.

3. Precursor according to claims 1 or 2 wherein at least one polymer of part (C) comprises at least 60% by weight of units of formula (I).

4. Precursor according to claims 1 - 3 wherein R is R¹-CO-.

5. Precursor according to claims 1 - 4 wherein at least one of the epoxy resins of part (B) is liquid at room temperature.

6. Precursor according to claims 1 - 5 additionally comprising of 0.5-17.5% by weight of one or more macromonomers.

7. Precursor according to claims 1 - 6 comprising from 0.005 - 2 % by weight with respect to the mass of the precursor of one or more crosslinking agents.

8. Precursor according to claims 1 - 7 comprising less than 0.2 % by weight with respect to the mass of part (A) of one or more crosslinking agents.

9. Thermosettable adhesive which is obtainable by photopolymerization of the precursor according to claims 1 - 8.

10. Thermoset adhesive which is obtainable by thermally curing the adhesive of claim 9.

11. Adhesive tape comprising one or more layers, at least one exposed layer of which comprising an adhesive according to claim 9.

12. Use of the adhesive tape according to claim 11 the thermosettable adhesive of which is obtainable by photopolymerization of the precursor of claim 7, for structural bonding applications.

13. Use of the adhesive tape according to claim 11 the thermosettable adhesive of which is obtainable by photopolymerization of the precursor of claim 8, for structural melt sealing applications.

## Patentansprüche

1. Photopolymerisierbarer Vorläufer eines wärmehärtbaren Klebstoffs, der eine verbesserte Auftragbarkeit aufweist und
(A) 30 bis 65 Gew.-% eines photopolymerisierbaren, gegebenenfalls teilweise vorpolymerisierten Gemischs mit mindestens einem monofunktionellen Acrylsäureester eines nichttertiären Alkohols und mindestens einem verstärkenden, copolymerisierbaren Monomer;
(B) 10 bis 65 Gew.-% eines oder mehrerer Epoxidharze ohne photopolymerisierbare Gruppen;
(C) 0,2 bis 15 Gew.-% eines oder mehrerer Polymere, von denen eines ein Polymer vom Vinylester- oder Vinylethertyp mit Einheiten der Formel (I) 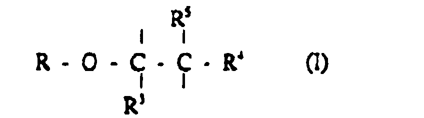 worin R für R¹-CO- oder R² steht,
R¹ und R² unabhängig voneinander für lineare oder verzweigte Alkylgruppen mit 1-5 C-Atomen stehen, wobei eine oder zwei nicht benachbarte CH₂-Gruppen unabhängig voneinander durch -O-, -CH(Halogen)-, -C (Halogen)₂- oder -CO- ersetzt sein können mit der Maßgabe, daß zwei O-Atome nicht direkt verknüpft sind, und
R³, R⁴ und R⁵ unabhängig voneinander für H oder Halogen stehen oder die für R¹ und R² angegebene Bedeutung haben,
darstellt;
(D) 0,1 bis 10 Gew.-% eines wärmeaktivierbaren Härters für das Epoxidharz;
(E) 0,005 bis 3 Gew.-% eines Photoinitiators und
(F) 0 bis 2 Gew.-% eines oder mehrerer Vernetzer enthält.

2. Vorläufer nach Anspruch 1, bei dem mindestens ein Polymer von Teil (C) ein mittleres Molekulargewicht zwischen 50.000 und 500.000 g/mol aufweist.

3. Vorläufer nach Anspruch 1 oder 2, bei dem mindestens ein Polymer von Teil (C) mindestens 60% Einheiten der Formel (I) enthält.

4. Vorläufer nach den Ansprüchen 1-3, bei dem R für R¹-CO- steht.

5. Vorläufer nach den Ansprüchen 1-4, bei dem mindestens eines der Epoxidharze des Teils (B) bei Raumtemperatur flüssig ist.

6. Vorläufer nach den Ansprüchen 1-5, der außerdem auch noch 0,5 bis 17,5 Gew.-% eines oder mehrerer Makromonomere enthält.

7. Vorläufer nach den Ansprüchen 1-6, der 0,005 bis 2 Gew.-% eines oder mehrerer Vernetzer, bezogen auf die Masse des Vorläufers, enthält.

8. Vorläufer nach den Ansprüchen 1-7, der weniger als 0,2 Gew.-% eines oder mehrerer Vernetzer, bezogen auf die Masse des Teils (A), enthält.

9. Wärmehärtbarer Klebstoff, der durch Photopolymerisation des Vorläufers gemäß den Ansprüchen 1-8 erhältlich ist.

10. Wärmegehärteter Klebstoff, der durch thermisches Härten des Klebstoffs gemäß Anspruch 9 erhältlich ist.

11. Klebeband mit einer oder mehreren Schichten, von denen mindestens eine freiliegende Schicht einen Klebstoff gemäß Anspruch 9 enthält.

12. Verwendung des Klebebands gemäß Anspruch 11, dessen wärmehärtbarer Klebstoff durch Photopolymerisation des Vorläufers gemäß Anspruch 7 erhältlich ist, zum strukturellen Kleben.

13. Verwendung des Klebebands gemäß Anspruch 11, dessen wärmehärtbarer Klebstoff durch Photopolymerisation des Vorläufers gemäß Anspruch 8 erhältlich ist, zum strukturellen Schmelzabdichten.

## Revendications

1. Précurseur photopolymérisable d'un adhésif thermodurcissable, ledit précurseur présentant une aptitude au revêtement améliorée et comprenant
(A) de 30 à 65% en poids d'un mélange photopolymérisable éventuellement partiellement prépolymérisé comprenant au moins un ester monofonctionnel de l'acide acrylique et d'un alcool non tertiaire, et au moins un monomère copolymérisable renforçateur;
(B) de 10 à 65% en poids d'une ou de plusieurs résines époxy ne renfermant pas de groupes photopolymérisables;
(C) de 0,2 à 15% en poids d'un ou de plusieurs polymères, au moins l'un d'entre eux étant un polymère du type ester vinylique ou un polymère du type éther vinylique comprenant des motifs de formule (I) 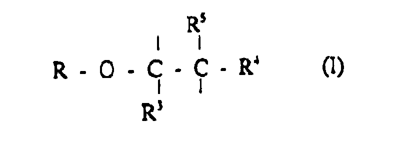 dans laquelle R est R¹-CO- ou R²,
R¹ et R² sont, indépendamment l'un de l'autre, des groupes alkyle linéaires ou ramifiés ayant de 1 à 5 atomes de carbone, où un ou deux groupes CH₂ non adjacents peuvent être remplacés, indépendamment l'un de l'autre, par -O-, CHhalogène-, -C(halogène)₂- ou -CO- à condition que deux atomes d'oxygène ne soient pas liés directement, et
R³, R⁴ et R⁵ sont, indépendamment les uns des autres, H, un halogène ou ont la signification indiquée pour R¹ et R²;
(D) de 0,1% à 10% en poids d'un durcissant thermoactivable pour la résine époxy;
(E) de 0,005 à 3% d'un photoamorceur; et
(F) de 0 à 2% en poids d'un ou de plusieurs agents de réticulation.

2. Précurseur selon la revendication 1, dans lequel au moins un polymère de la partie (C) présente un poids moléculaire moyen compris entre 50 000 et 500 000 g/mol.

3. Précurseur selon les revendications 1 ou 2, dans lequel au moins un polymère de la partie (C) comprend au moins 60% en poids de motifs de formule (I).

4. Précurseur selon les revendications 1 à 3, dans lequel R est R¹-CO-.

5. Précurseur selon les revendications 1 à 4, dans lequel au moins l'une des résines époxy de la partie (B) est liquide à la température ambiante.

6. Précurseur selon les revendications 1 à 5, comprenant en outre de 0,5 à 17,5% en poids d'un ou de plusieurs macromonomères.

7. Précurseur selon les revendications 1 à 6, comprenant de 0,005 à 2% en poids d'un ou de plusieurs agents de réticulation, par rapport à la masse du précurseur.

8. Précurseur selon les revendications 1 à 7, comprenant moins de 0,2% en poids d'un ou de plusieurs agents de réticulation, par rapport à la masse de la partie (A).

9. Adhésif thermodurcissable pouvant être obtenu par photopolymérisation du précurseur selon les revendications 1 à 8.

10. Adhésif thermodurci pouvant être obtenu par drucissement thermique de l'adhésif selon la revendication 9.

11. Ruban adhésif comprenant une ou plusieurs couches, dont au moins une couche exposée comprend un adhésif selon la revendication 9.

12. Utilisation du ruban adhésif selon la revendication 11, dont l'adhésif thermodurcissable peut être obtenu par photopolymérisation du précurseur selon la revendication 7, pour des applications de liaison stucturelle.

13. Utilisation du ruban adhésif selon la revendication 11, dont l'adhésif thermodurcissable peut être obtenu par photopolymérisation du précurseur selon la revendication 8, pour des applications d'étanchéisation stucturelle par fusion.
